(19) Europäisches Patentamt
European Patent Office
Office européen des brevets

(11) EP 2 216 355 A1

(12) EUROPEAN PATENT APPLICATION
published in accordance with Art. 153(4) EPC

(43) Date of publication:
**11.08.2010 Bulletin 2010/32**

(21) Application number: **08853501.8**

(22) Date of filing: **30.10.2008**

(51) Int Cl.:
***C08G 59/42*** *(2006.01)* ***C08K 3/36*** *(2006.01)*
***C08K 9/04*** *(2006.01)* ***C08L 63/00*** *(2006.01)*

(86) International application number:
**PCT/JP2008/069809**

(87) International publication number:
**WO 2009/069429 (04.06.2009 Gazette 2009/23)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.11.2007 JP 2007309253**

(71) Applicant: **Nissan Chemical Industries, Ltd.**
**Chiyoda-ku**
**Tokyo 101-0054 (JP)**

(72) Inventors:
- **SUEMURA, Naohiko**
  **Sodegaura-shi**
  **Chiba 299-0266 (JP)**
- **TAKEYAMA, Toshiaki**
  **Funabashi-shi**
  **Chiba 274-8507 (JP)**

(74) Representative: **Hartz, Nikolai**
**Wächtershäuser & Hartz**
**Patentanwaltspartnerschaft**
**Weinstrasse 8**
**80333 München (DE)**

# (54) SILICA-CONTAINING EPOXY CURING AGENT AND EPOXY RESIN CURED BODY

(57) The present invention provides an epoxy curing agent comprising colloidal silica particles, which is a liquid having low viscosity and excellent transparency and is suitable as a curing agent for a resin composition for sealing optical semiconductor elements.

The epoxy curing agent comprises colloidal silica particles with an average primary particle size of from 5 to 40 nm and a fully saturated dicarboxylic anhydride which is a liquid at 30°C, and it has a light transmittance of at least 60% at a wavelength of 500 nm for a light path length of 10 mm when the concentration of the colloidal silica particles is adjusted to 10 mass%.

EP 2 216 355 A1

## Description

TECHNICAL FIELD

The present invention relates to a highly transparent epoxy curing agent comprising colloidal silica particles and a fully saturated dicarboxylic anhydride, and a transparent cured epoxy resin product using it.

BACKGROUND ART

As a sealing resin composition to be used for sealing optical semiconductor elements such as light-emitting diodes (LEDs), its cured product is required to have transparency, and, an epoxy resin curing composition obtained by using an epoxy resin such as a bisphenol-A-type epoxy resin, an alicyclic epoxy resin or triglycidyl isocyanurate, and an acid anhydride as a curing agent is commonly used. However, if such an epoxy resin curing composition is used as a sealing resin, an internal stress would be generated by shrinkage due to curing of the epoxy resin curing composition or by a strain due to a difference in coefficient of linear expansion between the cured epoxy resin product and an optical semiconductor element, and thus the optical semiconductor element would deteriorate. Therefore, as a method for reducing the internal stress, it has been proposed to add an inorganic powder having a low coefficient of linear expansion and an average particle size of from 3 to 60 μm to the epoxy resin curing composition, and, further, as a method for preventing an obtained cured product from deterioration in light transmittance, it has been proposed to make the refractive indexes of the inorganic powder and the epoxy resin to be substantially equal (Patent Document 1).

Also, as a method for obtaining a colorless transparent epoxy resin cured product, it has been proposed to use an epoxy resin curing composition comprising an epoxy resin, a curing agent, a curing accelerator and inorganic oxide particles having an average primary particle size of at most 100 nm (Patent Document 2).

Meanwhile, it has been proposed to use, as one liquid of a two-liquid type epoxy resin curing composition which can improve insulation property of a cured epoxy resin product, a liquid of a specific epoxy curing agent mixed with an inorganic filler containing a spherical silica having an average particle size of 2 μm and a curing accelerator, and it is disclosed that such a liquid has a viscosity of from 25,000 to 33,000 mPa·s at 25°C (Patent Document 3).

Patent Document 1: JP-A-Hei11-74424
Patent Document 2: JP-A-2005-225964
Patent Document 3: JP-A-Hei11-71503

DISCLOSURE OF THE INVENTION

OBJECT TO BE ACCOMPLISHED BY THE INVENTION

When an epoxy resin curing composition having silica particles incorporated is used as a sealing resin composition for optical semiconductor elements such as light-emitting diodes (LEDs), if the average particle size of the silica particles is from 3 to 60 μm, the light transmittance of the obtained cured product will be insufficient, even if the refractive indexes of the epoxy resin and the silica particles are made to be substantially equal. Further, if inorganic oxide particles having an average primary particle size of at most 100 nm dispersed in an organic solvent are incorporated to an epoxy resin curing composition and the solvent is removed under such a condition that a curing reaction does not proceed, the solvent removal would be incomplete and the solvent may remain in the cured product. And, if the amount of the spherical silica having an average particle size of less than 2 μm is more than a certain level, the viscosity of the liquid would be high, which might decrease cast molding workability.

An object of the present invention is to provide an epoxy curing agent comprising colloidal silica particles, which is a liquid having low viscosity and excellent transparency and is suitable as a curing agent for an epoxy resin curing composition which may be used for a resin composition for sealing optical semiconductor elements; a process for its production; and a cured epoxy resin product using such a curing agent.

MEANS TO ACCOMPLISH THE OBJECT

The present invention provides the following, whereby the above object is accomplished:

(1) An epoxy curing agent comprising colloidal silica particles with an average primary particle size of from 5 to 40 nm and a fully saturated dicarboxylic anhydride which is a liquid at 30°C, said curing agent having a light transmittance of at least 60% at a wavelength of 500 nm for a light path length of 10 mm when the concentration of the colloidal silica particles is adjusted to 10 mass%.

(2) The epoxy curing agent according to the above (1), wherein the concentration of the colloidal silica particles is from 5 to 70 mass%.
(3) The epoxy curing agent according to the above (1), wherein the concentration of the colloidal silica particles is from 10 to 60 mass%.
(4) The epoxy curing agent according to any one of the above (1) to (3), which contains from 0.01 to 50 parts by mass of a non-alcoholic organic solvent per 100 parts by mass of the colloidal silica particles.
(5) The epoxy curing agent according to any one of the above (1) to (4), wherein the fully saturated dicarboxylic anhydride is at least one member selected from the group consisting of methyl hexahydrophthalic anhydride, hydrogenated methylnadic anhydride and hydrogenated trimellitic anhydride.
(6) An epoxy resin curing composition comprising the epoxy curing agent as defined in any one of the above (1) to (5) and an epoxy resin.
(7) The epoxy resin curing composition according to the above (6), which further contains a curing accelerator.
(8) The epoxy resin curing composition according to the above (7), which contains from 50 to 500 parts by mass of the epoxy curing agent and from 0.1 to 10 parts by mass of the curing accelerator, per 100 parts by mass of the epoxy resin.
(9) A process for producing the epoxy curing agent as defined in any one of the above (1) to (5), which comprises the following steps (a) and (b):

Step (a): surface-treating colloidal silica particles in a silica sol dispersed in a non-alcoholic organic solvent, with an organic silane compound; and
Step (b): substituting a fully saturated dicarboxylic anhydride for the non-alcoholic organic solvent which is the dispersion medium in the silica sol dispersed in the non-alcoholic organic solvent containing the surface-treated colloidal silica particles, obtained in step (a).

(10) A process for producing the epoxy curing agent as defined in any one of the above (1) to (5), which comprises the following steps (a'), (b') and (c'):

Step (a'): surface-treating colloidal silica particles in a silica sol dispersed in an alcoholic organic solvent, with an organic silane compound;
Step (b'): substituting a non-alcoholic organic solvent for the alcoholic organic solvent which is the dispersion medium in the silica sol dispersed in the alcoholic organic solvent containing the surface-treated colloidal silica particles, obtained in step (a'); and
Step (c'): substituting a fully saturated dicarboxylic anhydride for the non-alcoholic organic solvent which is the dispersion medium in the silica sol dispersed in the non-alcoholic organic solvent containing the surface-treated colloidal silica particles, obtained in step (b').

(11) A cured epoxy resin product wherein the epoxy curing agent as defined in any one of the above (1) to (5) is used.

## EFFECTS OF THE INVENTION

The epoxy curing agent of the present invention comprises colloidal silica particles with an average primary particle size of from 5 to 40 nm and a fully saturated dicarboxylic anhydride which is a liquid at 30°C, said curing agent having a light transmittance of at least 60% at a wavelength of 500 nm for a light path length of 10 mm when the concentration of the silica particles is adjusted to 10 mass%. The epoxy curing agent of the present invention is used as a component of an epoxy resin curing composition, whereby nano-sized colloidal particles can be introduced into a cured epoxy resin product. And, even when colloidal silica particles cannot be dispersed in an epoxy resin because the epoxy resin is a solid or a highly-viscous liquid, the colloidal silica particles are dispersed in the epoxy curing agent, whereby the colloidal silica particles can be dispersed in the cured epoxy resin product easily at a high filling rate.
Further, because the epoxy curing agent of the present invention has extremely high transparency, the obtained cured epoxy resin product does not lose its transparency even if it contains a silica component as a filler at a high concentration, and therefore, such an epoxy curing agent is quite useful as an epoxy curing agent for an epoxy resin curing composition to be used for a resin composition for sealing optical semiconductor elements such as LEDs.

## BEST MODE FOR CARRYING OUT THE INVENTION

Hereinafter, the epoxy curing agent of the present invention will be described in detail.
The epoxy curing agent of the present invention is an epoxy curing agent comprising colloidal silica particles with an average primary particle size measured by nitrogen adsorption method of from 5 to 40 nm and a fully saturated

dicarboxylic anhydride which is a liquid at 30°C, and it has a light transmittance of at least 60% at a wavelength of 500 nm for a light path length of 10 mm when the concentration of the colloidal silica particles (hereinafter also referred to as a silica concentration) is adjusted to 10 mass% in the total i.e. 100 mass% of the epoxy curing agent.

The silica concentration of the epoxy curing agent of the present invention is from 5 to 70 mass%, preferably from 10 to 60 mass%.

The colloidal silica particles contained in the epoxy curing agent of the present invention is colloidal silica particles derived from water and/or a silica sol dispersed in an organic solvent, produced by a known method from a liquid glass or a silicon alkoxide, wherein the particles are not coagulated in the dispersion medium.

The average primary particle size of the colloidal silica particles contained in the epoxy curing agent of the present invention is a particle size by nitrogen adsorption method calculated from a formula of D(nm)=2,720/S, wherein S($m^2$/g) is a specific surface area obtained by the nitrogen adsorption method (BET method). If the average primary particle size of the colloidal silica particles is less than 5 nm, the silica concentration of the epoxy curing agent of the present invention cannot be increased, and such an average primary particle size is not preferred. If the average primary particle size is more than 40 nm, the transparency of the cured epoxy resin product would be decreased, and such an average primary particle size is not preferred. More preferred average primary particle size of the colloidal silica particles is from 10 to 30 nm.

Furthermore, the colloidal silica particles contained in the epoxy curing agent of the present invention preferably have narrower particle size distribution from the viewpoint that a cured epoxy resin product having higher transparency can be obtained. The particle size distribution can be determined by observing the colloidal silica particles under a transmission electron microscope. The colloidal silica particles are normally spherical or almost-spherical, but distorted and elongated colloidal silica particles are also highly transparent and can be used in the present invention. The distorted and elongated colloidal silica particles are, for example, disclosed in JP-A-1-317115.

The colloidal silica particles contained in the epoxy curing agent of the present invention preferably has a refractive index of at least 1.43, preferably at least 1.44, from the viewpoint that a cured epoxy resin product having higher transparency can be obtained.

Furthermore, the colloidal silica particles contained in the epoxy curing agent of the present invention are preferably surface-treated with an organic silane compound which can react with a silanol group on the surface of the colloidal silica particles to form a covalent bond. Due to this surface treatment, the colloidal silica particles can be improved in its dispersability in a fully saturated dicarboxylic anhydride or an epoxy resin curing composition.

The organic silane compound which can react with a silanol group on the surface of colloidal silica particles to form a covalent bond may, for example, be a silazane compound, a siloxane compound or an alkoxysilane, or its partial hydrolysate or an oligomer consisting of from two to five monomers of the hydrolysate.

The silazane compound may, for example, be hexamethyldisilazane or hexaethyldisilazane.

The siloxane compound may, for example, be hexamethyldisiloxane, 1,3-dibutyltetramethyldisiloxane, 1,3-diphenyltetramethyldisiloxane, 1,3-divinyltetramethyldisiloxane, hexaethyldisiloxane or 3-glycidoxypropylpentamethyldisiloxane.

The alkoxysilane may, for example, be trimethylmethoxysilane, trimethylethoxysilane, trimethylpropoxysilane, phenyldimethylmethoxysilane, chloropropyldimethylmethoxysilane, dimethyldimethoxysilane, methyltrimethoxysilane, tetramethoxysilane, tetraethoxysilane, tetrapropoxysilane, tetrabutoxysilane, ethyltrimethoxysilane, dimethyldiethoxysilane, propyltriethoxysilane, n-butyltrimethoxysilane, n-hexyltrimethoxysilane, n-octyltriethoxysilane, n-octylmethyldiethoxysilane, n-octadecyltrimethoxysilane, phenyltrimethoxysilane, phenylmethyldimethoxysilane, phenethyltrimethoxysilane, dodecyltrimethoxysilane, n-octadecyltriethoxysilane, phenyldimethylmethoxysilane, phenyltriethoxysilane, diphenyldimethoxysilane, vinyltrimethoxysilane, vinyltriethoxysilane, vinyltris(β-methoxyethoxy)silane, γ-methacryloxypropyltrimethoxysilane, γ-acryloxypropyltrimethoxysilane, γ-(methacryloxypropyl)methyldimethoxysilane, γ-methacryloxypropylmethyldiethoxysilane, γ-methacryloxypropyltriethoxysilane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, N-β(aminoethyl)y-(aminopropyl)methyldimethoxysilane, N-β(aminoethyl)γ-(aminopropyl)trimethoxysilane, N-β(aminoethyl)γ-(aminopropyl)triethoxysilane, γ-aminopropyltrimethoxysilane, γ-aminopropyltriethoxysilane, N-phenyl-γ-aminopropyltrimethoxysilane, γ-mercaptopropyltrimethoxysilane, 3-isocyanatopropyltriethoxysilane, trifluoropropyltrimethoxysilane, heptadeca trifluoropropyltrimethoxysilane, n-decyltrimethoxysilane, dimethoxydiethoxysilane, bis(triethoxysilyl)ethane or hexaethoxydisiloxane.

The organic silane compound may be used alone, or two or more of such compounds may be used in mixture.

For the surface treatment of the colloidal silica particles with the organic silane compound, the amount of the organic silane compound is preferably from 0.1 to 20 μmol, more preferably from 0.5 to 8 μmol, per 1 $m^2$ of the surface area of the colloidal silica particles. If the amount of the organic silane compound is less than 0.1 μmol/$m^2$, sufficient effect of the surface treatment cannot be obtained. If the amount of the organic silane compound is more than 20 μmol/$m^2$, a large amount of the organic silane compound which does not bond to the colloidal silica particles remain, which might have a negative effect to the property of the cured epoxy resin product and is not preferred.

Moreover, if the colloidal silica particles contained in the epoxy curing agent of the present invention is derived from an acidic silica sol, after the thermal curing of the epoxy resin curing composition, the cured product might become colored, and the transparency of the cured product might be decreased. Therefore, it is preferred to add a basic substance to the above acidic silica sol to neutralize it before mixing the fully saturated dicarboxylic anhydride and the acidic silica sol. The basic substance is added to the silica sol in a state of an acidic aqueous silica sol or a silica sol dispersed in an organic solvent, and the pH of the silica sol is adjusted preferably to from 4 to 8, more preferably to from 5 to 8.

The basic substance may, for example, be lithium hydroxide, beryllium hydroxide, sodium hydroxide, magnesium hydroxide, potassium hydroxide, calcium hydroxide, ammonium hydroxide or an organic amine. The organic amine may, for example, be an alkyl amine such as isopropyl amine, diisopropyl amine, n-propyl amine or diisobutyl amine; an aralkyl amine such as benzyl amine; an alicyclic amine such as piperidine; an alkanol amine such as monoethanol amine or triethanol amine; a quaternary ammonium such as tetramethyl ammonium hydroxide; imidazole or a derivative of imidazole; a cyclic amine such as 1,8-diaza-bicyclo(5,4,0)undec-7-ene, 1,5-diaza-bicyclo(4,3,0)non-5-ene or 1,4-diaza-bicyclo(2,2,2)octane; or an aminosilane such as aminopropyltrimethoxysilane or aminopropyltriethoxysilane.

The epoxy curing agent of the present invention has a viscosity of from 1 to 200,000 mPa·s, preferably from 1 to 50,000 mPa·s, further preferably from 1 to 5,000 mPa·s , at 30°C.

The epoxy curing agent of the present invention has high transparency, and it has a light transmittance of at least 60%, preferably at least 80%, further preferably at least 90%, at a wavelength of 500 nm for a light path length of 10 mm when the concentration of the colloidal silica particle is adjusted to 10 mass%.

In the present invention, a fully saturated dicarboxylic anhydride means an epoxy curing agent generally used as a component of an epoxy resin curing composition, which is a dicarboxylic anhydride having no unsaturated hydrocarbon bond and is liquid at 30°C. The fully saturated dicarboxylic anhydride may be used alone, or two or more of such fully saturated dicarboxylic anhydrides may be used in mixture. If the dicarboxylic anhydride has an unsaturated hydrocarbon bond, it might not meet requirements such as colorless transparency, heat yellowing resistance and ultraviolet yellowing resistance, which are required when it is used for LEDs or other optical applications.

Specific examples of the fully saturated dicarboxylic anhydride used for the epoxy curing agent of the present invention include methylhexahydrophthalic anhydride, hexahydrophthalic anhydride, hydrogenated methylnadic anhydride, hydrogenated trimellitic anhydride and their ester derivatives such as cyclohexane-1,2,4-tricarboxylic acid-1,2-anhydride-4-ethyl ester and cyclohexane-1,2,4-tricarboxylic acid-1,2-anhydride-4-(1-propyl) ester. Among these fully saturated dicarboxylic anhydrides, methylhexahydrophthalic anhydride, hydrogenated methylnadic anhydride and hydrogenated trimellitic anhydride are particularly preferred from the viewpoint of its viscosity and the heat resistance, light resistance and colorless transparency of the cured product to be obtained.

The epoxy curing agent of the present invention may contain a small amount of non-alcoholic organic solvent for the purpose of e.g. viscosity adjustment, and the range of allowable content of the non-alcoholic organic solvent is from 0.01 to 50 parts by mass, preferably from 0.01 to 10 parts by mass, per 100 parts by mass of the colloidal silica particles contained in the epoxy curing agent of the present invention.

The contained non-alcoholic organic solvent preferably has low reactivity with a fully saturated dicarboxylic anhydride, and the non-alcoholic organic solvent may, for example, be an ether, an ester, a ketone, or a hydrocarbon.

The ether may, for example, be diethyl ether, dipropyl ether, dibutyl ether, tetrahydrofuran or dioxane.

The ester may, for example, be ethyl formate, methyl acetate, ethyl acetate, propyl acetate, butyl acetate, ethylene glycol monoethyl ether acetate or ethylene glycol monobutyl ether acetate.

The ketone may, for example, be acetone, methyl ethyl ketone, 2-pentanone, 3-pentanone, methyl isobutyl ketone, 2-heptanone or cyclohexanone.

The hydrocarbon may, for example, be n-hexane, cyclohexane, benzene, toluene, xylene, solvent naphtha, dichloromethane or trichloroethylene.

Another organic solvent may, for example, be acetonitrile, acetamide, N,N-dimethylformamide, dimethylsulfoxide, N,N-dimethylacetamide, or N-methylpyrrolidone.

Among the above non-alcoholic organic solvent, diethyl ether, methyl acetate, ethyl acetate, acetone, methyl ethyl ketone, methyl isobutyl ketone, n-hexane, cyclohexane, toluene, dichloromethane acetonitrile etc. are preferred.

An alcohol is not preferred because it has reactivity with the fully saturated dicarboxylic anhydride and ring-opening reaction of the anhydride would occur.

Next, the production process of the epoxy curing agent of the present invention will be described in detail. The epoxy curing agent of the present invention may be produced by the process comprising the following steps (a) and (b):

Step (a): Surface-treating colloidal silica particles in a silica sol dispersed in a non-alcoholic organic solvent, with an organic silane compound; and

Step (b): substituting a fully saturated dicarboxylic anhydride for the non-alcoholic organic solvent which is the dispersion medium in the silica sol dispersed in the non-alcoholic organic solvent containing the surface-treated colloidal silica particles, obtained in step (a).

The silica sol obtained in step (a) is a silica sol dispersed in a non-alcoholic organic solvent containing the colloidal silica particles surface-treated with an organic silane compound. The average primary particle size of the contained colloidal silica particles is from 5 to 40 nm, preferably from 5 to 30 nm.

The non-alcoholic organic solvent in the silica sol dispersed in the non-alcoholic organic solvent may, for example, be the same one as the above-described non-alcoholic organic solvent contained in the epoxy curing agent.

Additionally, the non-alcoholic organic solvent is preferably compatible with the fully saturated dicarboxylic anhydride, and, furthermore, the non-alcoholic organic solvent preferably has a boiling point of at most 100°C so that it will be easily removed in the production process of the epoxy curing agent of the present invention. Specifically, it is preferably diethyl ether, methyl acetate, ethyl acetate, acetone, methyl ethyl ketone, n-hexane, cyclohexane, dichloromethane, acetonitrile, etc.

The silica sol dispersed in the non-alcoholic organic solvent used in the step (a) may be obtained by replacing the aqueous silica sol or a silica sol dispersed in an alcoholic organic solvent, containing colloidal silica particles having an average primary particle size of from 5 to 40 nm, preferably from 5 to 30 nm with the non-alcoholic organic solvent. The solvent may be replaced by means of any known technique. Examples of the techniques include distillation replacement method and ultrafiltration.

If a free basic component exists in the aqueous silica sol or the silica sol dispersed in an alcoholic organic solvent, the stability of the silica sol dispersed in the non-alcoholic organic solvent to be obtained might be decreased, and therefore, at least a part of the free basic component needs to be removed by means of cation exchange or ultrafiltration. If the basic component is ammonia, it can be removed by means of distillation.

As the aqueous silica sol, commercial products may be used. Examples include SNOWTEX (registered trademark) OXS, SNOWTEX OS, SNOWTEX O, SNOWTEX O-40 and SNOWTEX OUP (each one is an acidic aqueous silica sol and manufactured by Nissan Chemical Industries, Ltd.).

The silica sol dispersed in an alcoholic organic solvent is, for example, an aqueous silica sol having water as the dispersion medium replaced with an alcoholic organic solvent such as methanol, ethanol, propanol or butanol, or commercial products may also be used. Examples of the commercial products include MA-ST-S, MT-ST, MA-ST-UP and MA-ST-MS (each one is a silica sol dispersed in methanol, manufactured by Nissan Chemical Industries, Ltd.); IPA-ST, IPA-ST-UP and IPA-ST-MS (each one is a silica sol dispersed in isopropanol, manufactured by Nissan Chemical Industries, Ltd.); NPC-ST-30 (a silica sol dispersed in n-propylcellosolve, manufactured by Nissan Chemical Industries, Ltd.); and PGM-ST (a silica sol dispersed in 1-methoxy-2-propanol, manufactured by Nissan Chemical Industries, Ltd.).

As the silica sol dispersed in the non-alcoholic organic solvent used in the step (a), commercial products may also be used. The silica sol dispersed in the non-alcoholic organic solvent containing colloidal silica particles having an average primary particle size of from 5 to 40 nm may, for example, be MEK-ST, MEK-ST-MS or MEK-ST-UP (each one is a silica sol dispersed in methyl ethyl ketone, manufactured by Nissan Chemical Industries, Ltd.); MIBK-ST (a silica sol dispersed in methyl isobutyl ketone, manufactured by Nissan Chemical Industries, Ltd.); EAC-ST (a silica sol dispersed in ethyl acetate, manufactured by Nissan Chemical Industries, Ltd.); TOL-ST (a silica sol dispersed in toluene, manufactured by Nissan Chemical Industries, Ltd.); DMAC-ST (a silica sol dispersed in dimethylacetamide, manufactured by Nissan Chemical Industries, Ltd.); or PMA-ST (a silica sol dispersed in propylene glycol monomethyl ether acetate, manufactured by Nissan Chemical Industries, Ltd.).

In the step (a), the silica sol dispersed in the non-alcoholic organic solvent containing surface-treated colloidal silica particles is prepared by adding an organic silane compound to the above silica sol dispersed in the non-alcoholic organic solvent and aging it. The colloidal silica particles are surface-treated with an organic silane compound, whereby the dispersion stability of the colloidal silica particles in the fully saturated dicarboxylic anhydride will be improved.

Some of the commercial silica sol dispersed in the non-alcoholic organic solvent contain colloidal silica particles which are already surface-treated, and, when such a silica sol dispersed in the non-alcoholic organic solvent is used in the step (a), the above described surface treatment can be omitted. In some cases, the silica sol dispersed in the non-alcoholic organic solvent containing colloidal silica particles which are already surface treated is additionally surface-treated, whereby the dispersabiltiy in the dicarboxylic anhydride may be further improved.

The amount of the organic silane compound to be added is preferably from 0.1 to 20 μmol, more preferably from 0.5 to 8 μmol, per 1 $m^2$ of the surface area of the colloidal silica particles contained in the silica sol dispersed in the non-alcoholic organic solvent. If the amount of the organic silane compound is less than 0.1 $\mu mol/m^2$, sufficient effect of the surface treatment cannot be obtained. If the amount is more than 20 $\mu mol/m^2$, a large amount of the organic silane compound which does not link to a colloidal silica particle would remain, which is not preferred because the property of the cured epoxy resin product might be negatively affected.

The method of surface treatment of the colloidal silica particles with the organic silane compound is to add the organic silane directly or as a non-alcoholic organic solvent solution into the silica sol dispersed in the non-alcoholic organic solvent with stirring. Because the surface treatment reaction proceeds more rapidly as the temperature becomes higher, the reaction time can be shortened by heating. The reaction temperature is preferably at least an ordinary temperature, particularly preferably a temperature close to the boiling point of the silica sol dispersed in the non-alcoholic

organic solvent. When the silica sol is heated at the temperature close to the above boiling point, it takes about 3 to 10 hours for sufficient surface treatment.

The silica sol dispersed in the non-alcoholic organic solvent containing surface-treated colloidal silica particles to be used in step (b) may be prepared by surface-treating the colloidal silica particles with the organic silane compound.

The silica sol dispersed in the non-alcoholic organic solvent to be used in step (b) preferably contains water and alcohol as little as possible. If water or an alcohol exists in the sol dispersed in a non-alcoholic organic solvent, the ring-opening reaction of the fully saturated dicarboxylic anhydride would occur due to the water or alcohol at the time of mixing with the anhydride, and the reactivity of the epoxy curing agent to be obtained to an epoxy group would be lost. The preferred content of the water is at most 0.5 mass%, preferably at most 0.2 mass%, more preferably at most 0.1 mass%, in the silica sol dispersed in the non-alcoholic organic solvent used in the above step (b). And, preferred content of the alcohol is at most 1.0 mass%, preferably at most 0.5 mass%, more preferably at most 0.2%, in the silica sol dispersed in the non-alcoholic organic solvent used in the above step (b). At the time of preparing the silica sol dispersed in the non-alcoholic organic solvent used in the above step (b), the water and the alcohol may be adjusted to the preferred range by means of a method such as distillation or solvent replacement.

If the pH of the silica sol dispersed in the non-alcoholic organic solvent used in the step (b) is less than 4 when it is diluted with equal mass of water, the cured epoxy resin product obtained by using the obtained epoxy curing agent would be colored, and the transparency of the cured product might be decreased. If the pH of the silica sol dispersed in the non-alcoholic organic solvent is more than 8 when it is diluted with equal mass of water, the dispersion stability of the silica sol dispersed in the non-alcoholic organic solvent might by decreased. Therefore, a basic substance is preferably added to the aqueous silica sol or the silica sol dispersed in the alcoholic organic solvent, which is the starting material of the silica sol dispersed in the non-alcoholic organic solvent, or the silica sol dispersed in the non-alcoholic organic solvent so that the pH of the silica sol dispersed in the non-alcoholic organic solvent will be from 4 to 8, preferably from 5 to 8, when it is diluted with the equal mass of water.

The basic substance may, for example, be lithium hydroxide, beryllium hydroxide, sodium hydroxide, magnesium hydroxide, potassium hydroxide, calcium hydroxide, ammonium hydroxide or an organic amine. As the organic amine, for example, an alkyl amine such as isopropyl amine, diisopropyl amine, n-propyl amine or diisobutyl amine; an aralkyl amine such as benzyl amine; an alicyclic amine such as piperidine; an alkanol amine such as monoethanol amine or triethanol amine; a quaternary ammonium such as tetramethyl ammonium hydroxide; imidazole or a derivative of imidazole; a cyclic amine such as 1,8-diaza-bicyclo(5,4,0)undec-7-ene, 1,5-diaza-bicyclo(4,3,0)non-5-ene or 1,4-diaza-bicyclo(2,2,2)octane; or an aminosilane such as aminopropyltrimethoxysilane or aminopropyltriethoxysilane may also be used.

As a neutralization method of the silica sol by adding a basic substance, such a method is used that the basic substance is added directly or properly as a dissolved substance in a solvent to the silica sol while the silica sol is stirred.

The next step (b) comprises mixing the silica sol dispersed in the non-alcoholic organic solvent containing the surface-treated colloidal silica particles obtained in step (a) with the fully saturated dicarboxylic anhydride and then removing the non-alcoholic organic solvent.

First, the silica sol dispersed in the non-alcoholic organic solvent containing the surface-treated colloidal silica particles obtained in step (a) is mixed with the fully saturated dicarboxylic anhydride, stirred to be uniform, and then the solvent is removed by means of an apparatus such as a rotary evaporator. The solvent is preferably removed under reduced pressure. By this solvent removal, the epoxy curing agent of the present invention can be obtained. Further, the epoxy curing agent of the present invention may have from 0.01 to 50 parts by mass, preferably from 0.01 to 10 parts by mass of the non-alcoholic organic solvent remaining, per 100 parts by mass of the colloidal silica particles contained in the epoxy curing agent for the purpose of adjustment of its viscosity.

The epoxy curing agent of the present invention may be produced by the process comprising the following steps (a'), (b') and (c'):

Step (a'): surface-treating colloidal silica particles in a silica sol dispersed in an alcoholic organic solvent, with an organic silane compound;

Step (b'): substituting a non-alcoholic organic solvent for the alcoholic organic solvent which is the dispersion medium in the silica sol dispersed in the alcoholic organic solvent containing the surface-treated colloidal silica particles, obtained in step (a'); and

Step (c'): substituting a fully saturated dicarboxylic anhydride for the non-alcoholic organic solvent which is the dispersion medium in the silica sol dispersed in the non-alcoholic organic solvent containing the surface-treated colloidal silica particles, obtained in step (b').

The silica sol dispersed in an alcoholic organic solvent used in the step (a') contains colloidal silica particles having an average primary particle size of from 5 to 40 nm, preferably from 5 to 30 nm, and it is, for example, an aqueous silica sol having the water as the dispersion medium replaced with an alcoholic organic solvent such as methanol,

ethanol, propanol or butanol. As the silica sol dispersed in the alcoholic organic solvent, commercial products may also be used, for example, the commercial products used in the step (a) may be mentioned.

In the step (a'), a silica sol dispersed in the alcoholic organic solvent containing surface-treated colloidal silica particles is prepared by adding an organic silane compound to the silica sol dispersed in an alcoholic organic solvent and aging it.

The amount of the organic silane compound is preferably from 0.1 to 20 μmol, more preferably from 0.5 to 8 μmol, per 1 $m^2$ of the surface area of the colloidal silica particles contained in the silica sol dispersed in the alcoholic organic solvent. If the amount of the organic silane compound is less than 0.1 $\mu mol/m^2$, sufficient effect of the surface treatment cannot be obtained. If the amount is more than 20 $\mu mol/m^2$, a large amount of the organic silane compound which does not link to the colloidal silica particle remains, which might have negative effect to the property of the cured epoxy resin product and is not preferred.

The method of surface treatment of the colloidal silica particles with the organic silane compound is to add the organic silane directly or as an alcoholic organic solvent solution into the silica sol dispersed in the alcoholic organic solvent with stirring. Because the surface treatment reaction proceeds more rapidly as the temperature becomes higher, the reaction time can be shortened by heating. The reaction temperature is preferably at least an ordinary temperature, particularly preferably a temperature close to the boiling point of the silica sol dispersed in the alcoholic organic solvent. When the silica sol is heated at the temperature close to the above boiling point, it takes about 3 to 10 hours for sufficient surface treatment.

The silica sol dispersed in the alcoholic organic solvent containing surface-treated colloidal silica particles to be used in step (b') may be prepared by surface-treating the colloidal silica particles with the organic silane compound.

Step (b') is a step which comprises substituting a non-alcoholic organic solvent for the alcoholic organic solvent which is the dispersion medium in the silica sol dispersed in the alcoholic organic solvent containing the surface-treated colloidal silica particles, obtained in step (a'). The non-alcoholic organic solvent may, for example, be the same non-alcoholic organic solvent used in the step (a). As the solvent replacement method, any known method may be employed. For example, distillation replacement method or ultrafiltration may be mentioned.

In the step (b'), the silica sol dispersed in the non-alcoholic organic solvent containing the surface-treated colloidal silica to be used in step (c') may be obtained.

The silica sol dispersed in the non-alcoholic organic solvent to be used in step (c') preferably contains water and alcohol as little as possible. If water or an alcohol exists in the sol dispersed in the non-alcoholic organic solvent, the ring-opening reaction of the fully saturated dicarboxylic anhydride would occur due to the water or alcohol at the time of mixing with the anhydride, and the reactivity of the epoxy curing agent to be obtained to an epoxy group would be lost. The preferred content of the water is at most 0.5 mass%, preferably at most 0.2 mass%, more preferably at most 0.1 mass%, in the silica sol dispersed in the non-alcoholic organic solvent used in the above step (c'). And, preferred content of the alcohol is at most 1.0 mass%, preferably at most 0.5 mass%, more preferably at most 0.2%, in the silica sol dispersed in the non-alcoholic organic solvent used in the above step (c'). At the time of preparing the silica sol dispersed in the non-alcoholic organic solvent used in the above step (c'), the water and the alcohol may be adjusted to the preferred range by means of a method such as distillation or solvent replacement.

If the pH of the silica sol dispersed in the non-alcoholic organic solvent used in the step (c') is less than 4 when it is diluted with equal mass of water, the cured epoxy resin product obtained by using the obtained epoxy curing agent would be colored, and the transparency of the cured product might be decreased. If the pH of the silica sol dispersed in the non-alcoholic organic solvent is more than 8 when it is diluted with equal mass of water, the dispersion stability of the silica sol dispersed in the non-alcoholic organic solvent might be decreased. Therefore, a basic substance is preferably added to the silica sol dispersed in the alcoholic organic solvent, which is the starting material of the silica sol dispersed in the non-alcoholic organic solvent, the aqueous silica sol, which is the starting material of the silica sol dispersed in the alcoholic organic solvent, or the silica sol dispersed in the non-alcoholic organic solvent so that the pH of the silica sol dispersed in the non-alcoholic organic solvent will be from 4 to 8, preferably from 5 to 8, when it is diluted with the equal mass of water.

The basic substance may, for example, be the basic substance used for adjusting the pH of the silica sol dispersed in the non-alcoholic organic solvent used in the step (b) to the range between 4 and 8.

As a neutralization method of the silica sol by adding a basic substance, such a method is used that the basic substance is added directly or properly as a dissolved substance in a solvent while the silica sol is stirred.

The next step (c') comprises mixing the silica sol dispersed in the non-alcoholic organic solvent containing the surface-treated colloidal silica particles obtained in step (b') with the fully saturated dicarboxylic anhydride and then removing the non-alcoholic organic solvent.

First, the silica sol dispersed in the non-alcoholic organic solvent containing the surface-treated colloidal silica particles obtained in step (b') is mixed with the fully saturated dicarboxylic anhydride, stirred to be uniform, and then the solvent is removed by means of an apparatus such as a rotary evaporator. The solvent is preferably removed under reduced pressure. By this solvent removal, the epoxy curing agent of the present invention can be obtained. Further,

the epoxy curing agent of the present invention may have from 0.01 to 50 parts by mass, preferably from 0.01 to 10 parts by mass of the non-alcoholic organic solvent remaining, per 100 parts by mass of the colloidal silica particles contained in the epoxy curing agent for the purpose of adjustment of its viscosity.

The epoxy curing agent of the present invention obtained by the process comprising step (a) and step (b) or the process comprising step (a'), step (b') and step (c') comprises colloidal silica particles with an average primary particle size measured by the nitrogen adsorption method of from 5 to 40 nm and a fully saturated dicarboxylic anhydride which is a liquid at 30°C, and it has a light transmittance of at least 60% at a wavelength of 500 nm for a light path length of 10 mm when the concentration of the silica is adjusted to 10 mass%.

And, the silica concentration of the epoxy curing agent obtained by the process comprising the step (a) and step (b) or the process comprising step (a'), step (b') and step (c') is from 5 to 70 mass%, preferably from 10 to 60 mass%.

The viscosity at 30°C of the epoxy curing agent obtained by the process comprising step (a) and step (b) or the process comprising step (a'), step (b') and step (c') is from 1 to 200,000 mPa·s, preferably from 1 to 50,000 mPa·s, further preferably from 1 to 5,000 mPa·s.

Further, the epoxy curing agent obtained by the process comprising step (a) and step (b) or the process comprising step (a'), step (b') and step (c') is colorless transparent, and it has a light transmittance of at least 60%, preferably 80%, further preferably 90%, at a wavelength of 500 nm for a light path length of 10 mm when the concentration of the silica is adjusted to 10 mass%. Additionally, even after stored at room temperature for one month, color change or temperature increase of the epoxy curing agent or sedimentation or coagulation of the silica component do not occur, which means it is also stable at the time of storage.

Next, the cured epoxy resin product of the present invention will be described in detail.

The cured epoxy resin product using the epoxy curing agent of the present invention is obtained by adding the epoxy curing agent to various epoxy resins, mixing it homogeneously and properly adding a curing accelerator to prepare an epoxy resin curing composition, and further polymerizing it on heating.

Although the epoxy resin used for the cured epoxy resin product of the present invention is not limited specifically, its specific example may be 1,4-butanediol diglycidyl ether, 1,2-epoxy-4-(epoxyethyl)cyclohexane, glycerol triglycidyl ether, diethylenegylcol diglycidyl ether, 2,6-diglycidylphenyl glycidyl ether, 1,1,3-tris[p-(2,3-epoxypropoxy)phenyl]propane, 1,2-cyclohexane dicarboxylic acid diglycidyl ester, 4,4'-methylenebis(N,N-diglycicylaniline), 3,4-epoxycyclohexylmethyl-3,4-epoxycyclohexane carboxylate, trimethylolethane triglycidyl ether, triglycidyl-p-aminophenol, tetraglycidylmethaxylene diamine, tetraglycidyldiaminodiphenylmethane, tetraglycidyl-1,3-bisaminomethylcyclohexane, bisphenol-A-diglycidyl ether, bisphenol-S-diglycidyl ether, pentaerythritol tetraglycidyl ether resorcinol diglycidyl ether, diglycidyl phthalate, neopentylglycol diglycidyl ether, polypropyleneglycol diglycidyl ether, tetrabromobisphenol-A-diglycidyl ether, bisphenolhexafluoroacetone diglycidyl ether, pentaerythritol diglycidyl ether, hydrogenated bisphenol-A- diglycidyl ether, tris-(2,3-epoxypropyl)isocyanurate, 1-{2,3-di(propionyloxy)}-3,5-bis(2,3-epoxypropyl)-1,3,5-triazine-2,4,6·(1H,3H,5H)-trione, 1,3-bis{2,3-di(propionyloxy)}-5-(2,3-epoxypropyl)-1,3,5-triazine-2,4,6·(1H,3H,5H)-trione, monoaryl diglycidyl isocyanurate, diglycerol polydiglycidyl ether, pentaerythritol polyglycidyl ether, 1,4-bis(2,3-epoxypropoxyperfluoroisopropyl)cyclohexane, sorbitol polyglycidyl ether, trimethylolpropane polyglycidyl ether, resorcin diglycidyl ether, 1,6-hexandiol diglycidyl ether, polyethylene glycol diglycidyl ether, phenyl glycidyl ether, p-tert-butylphenyl glycidyl ether, adipic acid diglycidyl ether, o-phthalic acid diglycidyl ether, dibromophenyl glycidyl ether, 1,2,7,8-diepoxyoctane, 1,6-dimethylolperfluorohexane diglycidyl ether, 4,4'-bis(2,3-epoxypropoxyperfluoroisopropyl)diphenyl ether, 2,2-bis(4-glycidyloxyphenyl)propane, 3,4-epoxycyclohexylmethyl-3',4'-epoxycyclohexane carboxylate, 3,4-epoxycyclohexyloxirane, 2-(3,4-epoxycyclohexyl)-3',4'-epoxy-1,3-dioxane-5-spirocyclohexane, 1,2-ethylenedioxy-bis(3,4-epoxycyclohexylmethane), 4',5'-epoxy-2'-methylcyclohexylmethyl-4,5-epoxy-2-methylcyclohexane carboxylate, ethylene glycol-bis(3,4-epoxycyclohexane carboxylate), bis-(3,4-epoxycyclohexylmethyl)adipate or bis(2,3-epoxycyclopentyl)ether. Among them, 3,4-epoxycyclohexylmethyl-3,4-epoxycyclohexane carboxylate, hydrogenated bisphenol-A-diglycidyl ether, tris-(2,3-epoxypropyl)isocyanurate, 1-(2,3-di(propionyloxy))-3,5-bis(2,3-epoxypropyl)1,3,5-triazine-2,4,6-(1H,3H,5H)-trione, 1,3-bis (2,3-di(propionyloxy))-5-(2,3-epoxypropyl)1,3,5-triazine-2,4,6-(1H,3H,5H)-trione or a mixture of some of these compounds is preferably used.

Further, by using an epoxy resin having silica particles dispersed as the epoxy resin, the silica particles can be introduced into the obtained cured epoxy resin product with a high filling rate. For example, by using an epoxy resin containing 50 mass% of silica particles prepared from a commercial epoxy resin CELLOXIDE (registered trademark) 2021 P (manufactured by Daicel Chemical Industries, Ltd.) with the epoxy curing agent of the present invention containing 50 mass% of colloidal silica particles for producing a cured product, about 50 mass% of the silica particles can be introduced into the cured epoxy resin product.

The mixing method of the epoxy curing agent of the present invention and the above epoxy resin is not specifically limited, but the epoxy curing agent and the epoxy resin are preferably stirred to be mixed homogeneously. If the viscosity of the epoxy resin curing composition containing the epoxy curing agent of the present invention and the above epoxy resin is so high that it is difficult to be mixed homogeneously, it may be heated at such a degree that the curing reaction of the curing composition does not proceed, whereby the viscosity of the curing composition will be decreased and its

workability will be improved.

Further, if a non-alcoholic organic solvent is contained in the epoxy curing agent of the present invention, the non-alcoholic organic solvent is also contained in the obtained epoxy resin curing composition, and the non-alcoholic organic solvent is preferably removed by applying a method such as pressure reduction or heating treatment to the curing composition.

A curing accelerator may be properly used together with the obtained epoxy resin curing composition. The curing accelerator may, for example, be an imidazole such as 2-methylimidazole or 2-ethyl-4-methylimidazole; an amine such as 2,4,6-tris(dimethylaminomethyl)phenol or benzyldimethylamine; an organic phosphorous compound such as triphenylphosphine or tributylphosphine; a halogenated triphenyl monoalkyl phosphonium such as triphenylethylphosphonium bromide; or a quaternary phosphonium salt such as tetrabutylphosphonium O or O'-diethyldithiophosphate. Among them, preferred examples of the curing accelerator include triphenylethylphosphonium bromide, tetrabutylphosphonium O, O'-diethyldithiophosphate and 2-ethyl-4-methylimidazole.

The epoxy resin curing composition of the present invention contains from 50 to 500 parts by mass of the epoxy curing agent of the present invention and from 0.1 to 10 parts by mass of the curing accelerator per 100 parts by mass of the epoxy resin.

The cured epoxy resin product of the present invention can be obtained by curing the epoxy resin curing composition by heating. The curing treatment is operated by means of an apparatus such as an oven at from 100 to 200°C, preferably from 120 to 180°C, and for from 2 to 8 hours, preferably from 3 to 6 hours.

The cured epoxy resin product of the present invention has high transparency because the used epoxy curing agent contains colloidal silica particles and has extremely high transparency, and its coefficient of linear expansion is suppressed, and it has further high flexural strength and flexural modulus.

EXAMPLES

Now, the present invention will be described in detail with reference to Examples. It should be understood, however, that the present invention is by no means limited to these Examples.

The measuring method of the properties of each silica sol and each epoxy curing agent will be described below.

[Average primary particle size of colloidal silica particles (particle size by nitrogen adsorption method)]

The surface area of dry powder of the silica sol was measured by using a surface area measurement apparatus Monosorb MS-16, manufactured by Yuasa Ionics Inc.

[Water content]

The water content was determined by Karl Fischer titration method.

[Particle size of colloidal silica particles by dynamic light scattering method]

Particle size of a silica sol diluted with the same solvent as its dispersion medium was determined with COULTER N5 (tradename, manufactured by COULTER of United States) with the parameter of the solvent.

[$SiO_2$ concentration]

A sample was measured and put into a crucible, and the $SiO_2$ concentration was calculated from the residue after burning in the crucible at 800°C.

[Organic solvent content]

The organic solvent content was determined by gas chromatography.

The conditions for gas chromatography is as follows:

Column: 3 mm × 1 m glass column
Packing: Porapak Q
Column temperature: from 130 to 230°C (heating rate: 8°C/min)
Carrier: $N_2$ 40 mL/min
Detector: FID
Injection volume: 1 μL

Internal standard: methyl ethyl ketone

[Viscosity]

The viscosity of the epoxy curing agent at 30°C was measured by using B type rotational viscometer manufactured by Toki Sangyo Co., Ltd.

[Light transmittance]

The light transmittance at a wavelength of 500 nm for a light path length of 10 mm with the colloidal silica particles concentration in the epoxy curing agent adjusted to 10 mass% was determined by using a spectrophotometer UV-3150, manufactured by Shimadzu Corporation. For the blank, pure water was used. The solution temperature was set to be 23°C.

(Epoxy curing agent)

EXAMPLE 1

800 g of a silica sol dispersed in methanol [MT-ST (tradename), particle size by nitrogen adsorption method: 12 nm, particle size by dynamic light scattering method: 20 nm, $SiO_2$ concentration: 30 mass%, methanol concentration: 68 mass%, water content; 2 mass%, manufactured by Nissan Chemical Industries, Ltd.] was charged into an eggplant flask having inner volume of 1 L, and, while acetonitrile was added, the solvent was evaporated and removed at 630 mbar and at a bath temperature of 70°C with a rotary evaporator. The solvent was evaporated and removed until the supplied amount of acetonitrile became 600 g with keeping the liquid level of the sol to be almost constant, to obtain 800 g of a sol dispersed in a mixed solvent of acetonitrile and methanol ($SiO_2$ concentration: 30 mass%, methanol concentration: 20 mass%, acetonitrile concentration: 49 mass%, water content: 1 mass%). Next, at atmospheric pressure and with stirring, 16.0 g of phenyltrimethoxysilane was added to the obtained sol, and it was heated at a bath temperature of 65°C for 5 hours. 17.0 g of 1.0 mass% methanol solution of sodium hydroxide was added to the sol, and it was stirred.

Then, while 1,200 g of acetonitrile was supplied, the solvent was evaporated and removed with a rotary evaporator at 630 to 450 mbar and at a bath temperature of 70°C with keeping the liquid level of the sol to be almost constant, and 800 g of a silica sol dispersed in acetonitrile ($SiO_2$ concentration: 30.0 mass%, acetonitrile concentration: 69.9 mass%, methanol concentration: 0.05%, water content: 0.03 mass%, pH of the sol diluted with the same mass of water: 5.7) was obtained. To 800 g of this silica sol dispersed in acetonitrile, 480 g of methylhexahydrophthalic anhydride (manufactured by Tokyo Chemical Industry Co., Ltd.), and then acetonitrile was evaporated and removed with an evaporator at 340 to 20 mbar and at a bath temperature of from 70 to 90°C to obtain an epoxy curing agent containing colorless transparent colloidal silica particles and methylhexahydrophthalic anhydride ($SiO_2$ concentration: 34.5 mass%, methylhexahydrophthalic anhydride concentration: 65.4 mass%, acetonitrile concentration: 0.1 mass%, B type viscosity at 30°C: 290 mPa·s, light transmittance: 99%) (epoxy curing agent (I)) was obtained. After the obtained epoxy curing agent was hermetically sealed and stored at 25°C for one month, the epoxy curing agent was colorless transparent and had B type viscosity at 30°C of 300 mPa·s, which means it was stable also at the time of storage.

EXAMPLE 2

In a polyethylene container having an inner volume of 3 L, 40.0 g of 10 mass% sodium hydroxide solution was added to 2,500 g of an acetic aqueous silica sol [SNOWTEX (registered trademark) O, particle size by nitrogen adsorption method: 12 nm, particle size by dynamic light scattering method: 20 nm, $SiO_2$ concentration: 20 mass%, pH 2.8, manufactured by Nissan Chemical Industries, Ltd.] with stirring with a disper at 1,000 rpm at 25°C for 60 minutes to obtain a sodium stabilized aqueous silica sol (pH 9.2). 2,540 g of this sodium stabilized aqueous silica sol was charged into a SUS316 autoclave container having an inner volume of 3 L and heated at 205°C for 2.5 hours to obtain a sodium stabilized aqueous silica sol having a particle size by nitrogen adsorption method of 22 nm. The sodium stabilized aqueous silica sol obtained by this heating treatment was passed through a column packed with 300 mL of hydrogen type strong acid cation exchange resin over one hour to obtain 2,540 g of acidic aqueous silica sol (particle size by nitrogen adsorption method: 22 nm, particle size by dynamic light scattering method: 30 nm, $SiO_2$ concentration: 20 mass%, pH 2.8).

2,500 g of this acidic aqueous silica sol was charged into a glass reactor having an inner volume of 3 L equipped with a stirrer, a condenser, a thermometer and two inlets, and, while the acidic aqueous silica sol in the reactor was boiling, methanol vapor generated in another boiler was continuously blown into the acidic aqueous silica sol in the reactor to substitute methanol for water with the liquid level being decreased slowly. The substitution was finished when

the volume of the distillate fluid became 25 L, and 2,030 g of a silica sol dispersed in methanol ($SiO_2$ concentration: 25 mass%, methanol concentration: 73.5 mass%, water content: 1.5 mass%, pH of the sol diluted with the same mass of water: 3.2) was obtained. Next, 2,000 g of this silica sol dispersed in methanol was charged into a eggplant flask having an inner volume of 3 L, and, while acetonitrile was added, the solvent was evaporated and removed with a rotary evaporator at 630 mbar and at a bath temperature of 70°C. The solvent was evaporated and removed until the supplied amount of acetonitrile became 1,500 g with keeping the liquid level of the sol to be almost constant, and 1,923 g of a sol dispersed in acetonitrile/methanol mixed solvent ($SiO_2$ concentration: 26 mass%, methanol concentration: 24 mass%, acetonitrile concentration: 49 mass%, water content: 1 mass%) was obtained. Next, with stirring at atmospheric pressure, 22.6 g of phenyltrimethoxysilane was added to the obtained sol dispersed in acetonitrile/methanol mixed solvent and heated at a bath temperature of 65°C for 5 hours. 33.6 g of 1.0 mass% methanol solution of sodium hydroxide was added to this sol and stirred.

Then, while 3,000 g of acetonitrile was supplied, the solvent was evaporated and removed with a rotary evaporator at 630 to 450 mbar and at a bath temperature of 70°C keeping the liquid level of the sol to be almost constant, and 1,800 g of a silica sol dispersed in acetonitrile ($SiO_2$ concentration: 28.0 mass%, acetonitrile concentration: 71.9 mass%, methanol concentration: 0.05%, water content: 0.02 mass%, pH of the sol diluted with the same mass of water: 6.3) was obtained. To 890 g of this silica sol dispersed in acetonitrile, 250 g of methylhexahydrophthalic anhydride (manufactured by Tokyo Chemical Industry Co., Ltd.), and then acetonitrile was evaporated and removed with an evaporator at 340 to 50 mbar and at a bath temperature of 70°C to obtain 503 g of an epoxy curing agent containing colorless transparent colloidal silica particles and methylhexahydrophthalic anhydride ($SiO_2$ concentration: 49.4 mass%, methylhexahydrophthalic anhydride concentration: 49.6 mass%, acetonitrile concentration: 1.0 mass%, B type viscosity at 30°C: 790 mPa·s, light transmittance: 99%) (epoxy curing agent (II)) was obtained. After the obtained epoxy curing agent was hermetically sealed and stored at 25°C for one month, the epoxy curing agent was colorless transparent and had B type viscosity at 30°C of 790 mPa·s, which means it was stable also at the time of storage.

## EXAMPLE 3

250 g of hydrogenated methylnadic anhydride [Rikacid (registered trademark) HNA-100, manufactured by New Japan chemical Co., Ltd.] was added to 890 g of the silica sol dispersed in acetonitrile obtained in Example 2, and the organic solvent was evaporated and removed with an evaporator at 340 to 50 mbar and at a bath temperature of 70°C to obtain 510 g of an epoxy curing agent containing colorless transparent colloidal silica particles and hydrogenated methylnadic anhydride ($SiO_2$ concentration: 48.4 mass%, hydrogenated methylnadic anhydride concentration: 48.3 mass%, acetonitrile: 3.3 mass%, B type viscosity at 30°C: 1,470 mPa·s, light transmittance: 99%). After the obtained epoxy curing agent was hermetically sealed in a glass container and stored for one month, it was colorless transparent and had a B type viscosity at 30°C of 1,500 mPa·s, which means it was stable at the time of storage.

## EXAMPLE 4

A sodium stabilized aqueous silica sol having a particle size by nitrogen adsorption method of 26 nm was obtained in the same manner as in Example 2 except that the heating temperature by an autoclave was 220°C. The sodium stabilized aqueous silica sol obtained by this heating treatment was passed through a column packed with 300 mL of hydrogen type strong acid cation exchange resin over one hour to obtain 2,540 g of acidic aqueous silica sol (particle size by nitrogen adsorption method: 26 nm, particle size by dynamic light scattering method: 39 nm, $SiO_2$ concentration: 20 mass%, pH 2.8). 2,500 g of this sol was charged into a glass reactor having an inner volume of 3 L equipped with a stirrer, a condenser, a thermometer and two inlets, and, while the sol in the reactor was boiling, methanol vapor generated in another boiler was continuously blown into the silica sol in the reactor to substitute methanol for water with the liquid level being decreased slowly. The substitution was finished when the volume of the distillate fluid became 25 L, and 2,030 g of a silica sol dispersed in methanol ($SiO_2$ concentration: 25 mass%, methanol concentration: 73.6 mass%, water content: 1.4 mass%, pH of the sol diluted with the same mass of water: 3.1) was obtained. Next, 1,000 g of this silica sol dispersed in methanol was charged into a eggplant flask having an inner volume of 3 L, and, while acetonitrile was added, the solvent was evaporated and removed with a rotary evaporator at 630 mbar and at a bath temperature of 70°C. The solvent was evaporated and removed until the supplied amount of acetonitrile became 750 g with keeping the liquid level of the sol to be almost constant, and a sol dispersed in acetonitrile/methanol mixed solvent ($SiO_2$ concentration: 26 mass%, methanol concentration: 24 mass%, acetonitrile concentration: 49 mass%, water content: 1 mass%) was obtained.

Next, with stirring at atmospheric pressure, 9.6 g of phenyltrimethoxysilane was added to the obtained sol and heated at a bath temperature of 65°C for 5 hours. 12.9 g of 1.0 mass% methanol solution of sodium hydroxide was added to this sol and stirred. Then, while acetonitrile was added, the solvent was evaporated and removed with a rotary evaporator at 630 to 450 mbar and at a bath temperature of 70°C. The solvent was evaporated and removed while 1,500

g of acetonitrile was supplied with keeping the liquid level of the sol to be almost constant, and 900 g of a silica sol dispersed in acetonitrile ($SiO_2$ concentration: 28 mass%, acetonitrile concentration: 71.9 mass%, methanol concentration: 0.06 mass%, water content: 0.02 mass%, pH of the sol diluted with the same mass of water: 5.8) was obtained. To 900 g of this of silica sol dispersed in acetonitrile, 250 g of methylhexahydrophthalic anhydride (manufactured by Tokyo Chemical Industry Co., Ltd.), and then the organic solvent was evaporated and removed with an evaporator at 340 to 20 mbar and at a bath temperature of 80°C to obtain 500 g of an epoxy curing agent containing colorless transparent colloidal silica particles and methylhexahydrophthalic anhydride ($SiO_2$ concentration: 50.1 mass%, methylhexahydrophthalic anhydride concentration: 49.8 mass%, acetonitrile concentration: 0.1 mass%, B type viscosity at 30°C: 3,060 mPa·s, light transmittance: 98%) (epoxy curing agent (III)) was obtained. After the obtained epoxy curing agent was hermetically sealed and stored at 25°C for one month, the epoxy curing agent was colorless transparent and had B type viscosity at 30°C of 3,100 mPa·s, which means it was stable at the time of storage.

COMPARATIVE EXAMPLE 1

Into 59.3 g of methylhexahydrophthalic anhydride charged in a 200 mL glass bottle with a lid, 6.6 g of fused silica powder [UFP-80 (tradename), specific surface area: 80 $m^2$/g, particle size by nitrogen adsorption method: 34 nm, manufactured by Denki Kagaku Kogyo Kabushiki Kaisha] was added, and it was subjected to ultrasonic waves with the lid closed in an ultrasonic bath (type FU-30C, manufactured by Tokyo Glass Kikai K.K.) for 60 minutes to obtain an epoxy curing agent containing silica powder displaying pale turbid white and methylhexahydrophthalic anhydride ($SiO_2$ concentration: 10 mass%, methylhexahydrophthalic anhydride concentration: 90 mass%, B type viscosity at 30°C: 200 mPa·s, light transmittance: 32%). The obtained epoxy curing agent had significantly low transparency as compared with the epoxy curing agents in Examples 1 to 4.

COMPARATIVE EXAMPLE 2

Comparative Example 2 was operated in the same manner as in Comparative Example 1 except that 14.8 g of fused silica powder [UFP-80, manufactured by Denki Kagaku Kogyo Kabushiki Kaisha] was used so that $SiO_2$ concentration after dispersion would be 20 mass%. The dispersed material of the silica powder had lost its fluidity to be a gel-like material. The light transmittance was not able to be measured.

COMPARATIVE EXAMPLE 3

Comparative Example 3 was operated in the same manner as in Comparative Example 1 except that 4.5 g of fumed silica powder [AEROSIL (registered trademark) 200, manufactured by NIPPON AEROSIL Co., Ltd.] as the silica powder instead of the fused silica powder. And an epoxy curing agent containing silica powder displaying a little turbidity and methylhexahydrophthalic anhydride ($SiO_2$ concentration: 7 mass%, methylhexahydrophthalic anhydride concentration: 93 mass%, B type viscosity at 30°C: 470 mPa·s, light transmittance: 45%) was obtained. The obtained epoxy curing agent had low transparency as compared with the epoxy curing agents in Examples 1 to 4, and it became turbid after it was left statically at 23°C for three days. Further, when $SiO_2$ concentration was increased to more than 7 mass%, its viscosity was suddenly increased and aggregated material was generated, and an epoxy curing agent having silica particles dispersed homogeneously cannot be obtained.

The results of Examples 1 to 4 and Comparative Examples 1 to 3 are collectively shown in Table 1.

In Table 1, MeHHPA in the column of acid anhydride represents methylhexahydroanhydride.

(Preparation of cured epoxy resin product)

Epoxy Resin (1):

Tris-(2,3-epoxypropyl)-isocyanurate (manufactured by Nissan Chemical Industries, Ltd., tradename: TEPIC (registered trademark) S) was used as epoxy resin (1). Synthesis of Epoxy Resin (2):

894.7 g of α-form tris-(2,3-epoxypropyl)-isocyanurate (manufactured by Nissan Chemical Industries, Ltd., epoxy value: 9.95 eq/kg) and 400 g of toluene were charged into a reaction flask equipped with a thermometer and a stirring apparatus and heated to the reflux temperature to be completely melted. Next, as a catalyst for the reaction, 313.3 g of propionic anhydride solution having 0.38 g of triphenylphosphonium bromide dissolved was dropped into the above reaction system over 60 minutes. After the dropping was finished, it was subjected to the reaction at the reflux temperature for two hours. Then, after condensing the reaction solution and confirming that the epoxy value became at most 5.65 eq/kg (5.48 eq/kg for theoretical value), toluene was removed to

obtain 1,208 g of a liquid modified epoxy resin.

The composition of the obtained liquid modified epoxy resin (2) was as follows:

Molar ratio (ii):(i-1):(i-2):(i-3) of the epoxy resin (2) was 35%:45%:17%:3%, wherein (ii) is tris-(2,3-epoxypropyl)-isocyanurate, compound (i-1) is tris-(2,3-epoxypropyl)-isocyanurate having one propionic anhydride added to its one epoxy group (monoadduct), compound (i-2) is tris-(2,3-epoxypropyl)-isocyanurate having two propionic anhydride added to its two epoxy groups (diadduct) and compound (i-3) is tris-(2,3-epoxypropyl)-isocyanurate having three propionic anhydride added to its three epoxy groups (triadduct).

The viscosity of this epoxy resin (2) was 1,300 mPa·s at 60°C.

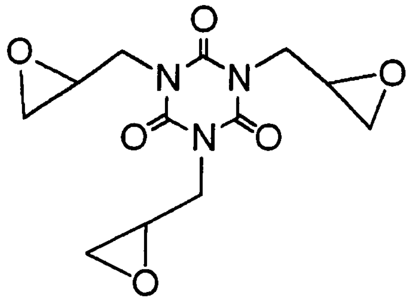

(i i)

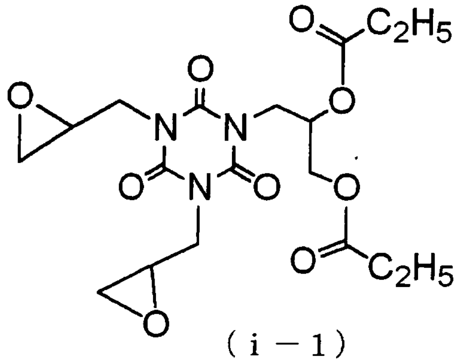

(i – 1)

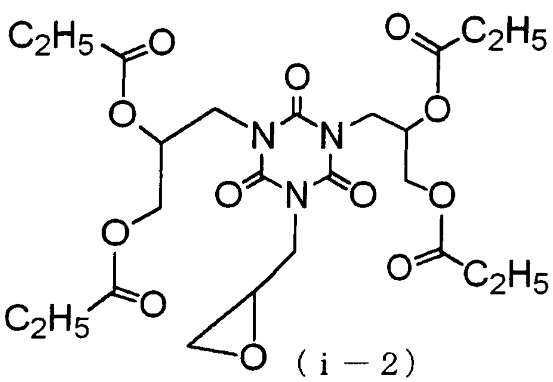

(i – 2)

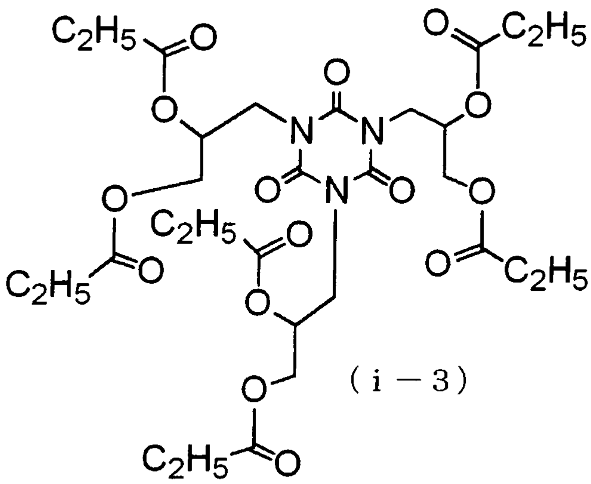

(i – 3)

Epoxy Resin (3):

A commercial epoxy resin (tradename: CELLOXIDE (registered trademark) 2021 P, manufactured by Daicel Chemical Industries, Ltd.) was used.

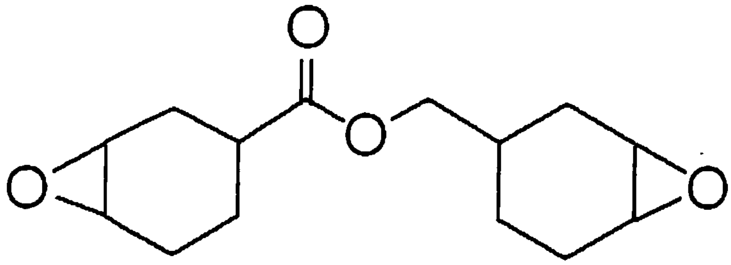

(3)

Curing Accelerator

As the curing accelerator, triphenylethylphosphonium bromide was used.

EXAMPLE 5

16.50 g of epoxy resin (1) and 40.21 g of epoxy curing agent (I) obtained in Example 1 were put into a four-neck flask and mixed with stirring at 80°C for 40 minutes. Then, 170 mg of triphenylethylphosphonium bromide as a curing accelerator dissolved in 3.2 g of methylhexahydrophthalic anhydride was added, and, further, they were defoamed under reduced pressure for 2 minutes to obtain an epoxy resin curing composition. In the obtained epoxy resin curing composition, residual solvent was not detected. The obtained epoxy resin curing composition was casted into a cast molding plate (a 3-mm-thick glass plate treated with a mold release agent SR-2410 (manufactured by Dow Corning Toray Co., Ltd.), and it was subjected to heating treatment under curing conditions of at 100°C for 2 hours, and at 180°C for 3 hours to obtain a cured epoxy resin product. The conditions of preparing the epoxy resin curing compositions and the properties of the cured epoxy resin product are shown in Table 2 and Table 3, respectively.
In Table 2, MeHHPA (methylhexahydrophthalic anhydride) in the column of epoxy curing agent means that MeHHPA was used instead of an epoxy curing agent, and TEP in the column of curing accelerator represents triphenylethylphosphonium bromide. And, TEP/MeHHPA represents methylhexahydrophthalic anhydride containing triphenylethylphosphonium bromide, and respective amounts are shown in the column.

EXAMPLES 6 TO 7 AND COMPARATIVE EXAMPLE 4 TO 6

Epoxy resin curing compositions were obtained in the same manner of operation as in Example 5.
In Table 2, epoxy resins, epoxy curing agents, mixing ratio of curing accelerators and temperature and time of mixing in Examples 6 to 7 and Comparative Examples 4 to 6 are collectively shown. The obtained epoxy resin curing composition was casted into a cast molding plate (a 3-mm-thick glass plate treated with a mold release agent SR-2410 (manufactured by Dow Corning Toray Co., Ltd.), and it was subjected to heating treatment under curing conditions of at 100°C for 2 hours and at 180°C for 3 hours to obtain a cured epoxy resin product.

TABLE 1

| | Acidic anhydride | $SiO_2$ content (mass%) | Average particle size (nm)(Particle size by nitrogen adsorption method) | Residual solvent (%) (Acetonitrile) | Viscosity (mPa·s) | Light Transmittance (%) (500 nm) |
|---|---|---|---|---|---|---|
| Ex.1 | MeHHPA | 34.5 | 12 | 0.1 | 290 | 99 |
| Ex.2 | MeHHPA | 49.4 | 22 | 1.2 | 790 | 99 |
| Ex.3 | Hydrogenated methylnadic anhydride | 48.4 | 22 | 3.3 | 1470 | 99 |

(continued)

| | Acidic anhydride | $SiO_2$ content (mass%) | Average particle size (nm) (Particle size by nitrogen adsorption method) | Residual solvent (%) (Acetonitrile) | Viscosity (mPa·s) | Light Transmittance (%) (500 nm) |
|---|---|---|---|---|---|---|
| Ex.4 | MeHHPA | 50.2 | 26 | 0.1 | 3060 | 98 |
| Comp. Ex.1 | MeHHPA | 10 | 34 | 0.0 | 200 | 32 |
| Comp. Ex.2 | MeHHPA | 20 | 34 | 0.0 | ∞ | Unmeasureable |
| Comp. Ex.3 | MeHHPA | 7 | 14 | 0.0 | 470 | 45 |

TABLE 2

| | Epoxy resin | | Epoxy curing agent | | Curing accelerator |
|---|---|---|---|---|---|
| | | | | | TEP/MeHHPA |
| Ex.5 | Epoxy resin (1) | 16.5 g | Epoxy curing agent (I) | 40.21 g | 170 mg/3.2 g |
| Ex.6 | Epoxy resin (2) | 24.95 g | Epoxy curing agent (II) | 42.02 g | 247 mg/2.0 g |
| Ex.7 | Epoxy resin (3) | 18.63 g | Epoxy curing agent (III) | 44.21 g | 186 mg/2.0 g |
| Comp. Ex.4 | Epoxy resin (1) | 16.50 g | MeHHPA | 26.29 g | 170 mg/3.2 g |
| Comp. Ex.5 | Epoxy resin (2) | 29.97 g | MeHHPA | 25.60 g | 296 mg/2.0 g |
| Comp. Ex.6 | Epoxy resin (3) | 26.44 g | MeHHPA | 32.34 g | 240 mg/2.0 g |

Three-point bending test (for measuring flexural strength and flexural modus) for the epoxy resin cured bodies obtained in Examples 5 to 7 and Comparative Examples 4 to 6 was carried out, and their transmittance and coefficient of linear expansion were measured. The measurement results are collectively shown in Table 3.

(Measurement of flexural properties)

Flexural properties were measured with a tensile testing machine in accordance with JIS K-6911.

On the center of a holded test piece, of which height and width were measured, load was applied with a press wedge, and breaking load of the test piece was measured, and the flexural strength (σ) was calculated.

$$\sigma = (3PL)/(2Wh^2)$$

wherein σ is flexural strength (MPa) {kgf/mm$^2$}, P is breaking load of the test piece (kgf), L is the distance between supporting points (mm), W is the width of the test piece (mm) and h is the height of the test piece (mm).

Flexural modulus (E) was calculated from the following formula:

$$E = [L^3/(4Wh^3)] \times [F/Y]$$

wherein E is flexural modulus (MPa) {kgf/mm$^2$}, F/Y is gradient of the linear portion of the load-deflection curve (kgf/mm), L is the distance between the supporting points (mm), W is the width of the test piece (mm) and h is the height of the test piece (mm).

(Measurement of transmittance)

The transmittance at a wavelength of 400 nm was measured with a spectrophotometer (model UV-3600, manufactured by Shimadzu Corporation).

(Measurement of coefficient of linear expansion)

The coefficient of linear expansion was measured in accordance with JIS K-6911.
Thickness of the test piece was accurately measured, and TMA (Thermal Mechanical Analysis) measurement was carried out with a load of 0.05 N and at a heating rate of 1°C/min.
Coefficient of linear expansion $\alpha_1$ was calculated from the following formula:

$$\alpha_1 = \text{Length change between at 30°C and at 80°C } (\Delta L1)/\text{initial length of the test piece } (L) \times 50$$

TABLE 3

| | Three-point bending test (MPa) | | Trans-mittance (%) | Coefficient of linear expansion | $SiO_2$ content | Average particle size (Particle size by nitrogen adsorption method) |
|---|---|---|---|---|---|---|
| | Flexural strength | Flexural modulus | 400 nm | ppm/°C | Mass% | nm |
| Ex.5 | 77 | 4,120 | 79 | 53 | 23 | 12 |
| Ex.6 | 138 | 4,350 | 76 | 63 | 30 | 22 |
| Ex.7 | 98 | 4,460 | 70 | 53 | 34 | 26 |
| Comp. Ex.4 | 58 | 2,890 | 77 | 55 | 0 | - |
| Comp. Ex.5 | 138 | 3,025 | 83 | 83 | 0 | - |
| Comp. Ex.6 | 98 | 2,890 | 78 | 58 | 0 | - |

In Table 3, among the cured epoxy resin product obtained in Examples 5 to 7 and Comparative Examples 4 to 6, the cured epoxy resin products of Examples 5 to 7 have the epoxy curing agent of the present invention mixed, whereby the coefficient of linear expansion could be decreased with the light transmittance almost sustained. That is, when a cured epoxy resin product obtained from a mixture containing the epoxy curing agent of the present invention is used for a sealing material for e.g. LEDs (light-emitting elements), the brightness of the light-emitting elements would not be decreased, and peeling due to the difference of thermal expansion can be prevented.

INDUSTRIAL APPLICABILITY

The cured epoxy resin product using the epoxy curing agent of the present invention is excellent in transparency, and it is industrially applicable for sailing optical semiconductor elements such as LEDs.
The entire disclosure of Japanese Patent Application No. 2007-309253 filed on November 29, 2007 including specification, claims and summary is incorporated herein by reference in its entirety.

**Claims**

1. An epoxy curing agent comprising colloidal silica particles with an average primary particle size of from 5 to 40 nm and a fully saturated dicarboxylic anhydride which is a liquid at 30°C, said curing agent having a light transmittance of at least 60% at a wavelength of 500 nm for a light path length of 10 mm when the concentration of the colloidal

silica particles is adjusted to 10 mass%.

**2.** The epoxy curing agent according to Claim1, wherein the concentration of the colloidal silica particles is from 5 to 70 mass%.

**3.** The epoxy curing agent according to Claim1, wherein the concentration of the colloidal silica particles is from 10 to 60 mass%.

**4.** The epoxy curing agent according to any one of Claims 1 to 3, which contains from 0.01 to 50 parts by mass of a non-alcoholic organic solvent per 100 parts by mass of the colloidal silica particles.

**5.** The epoxy curing agent according to any one of Claims 1 to 4, wherein the fully saturated dicarboxylic anhydride is at least one member selected from the group consisting of methyl hexahydrophthalic anhydride, hydrogenated methylnadic anhydride and hydrogenated trimellitic anhydride.

**6.** An epoxy resin curing composition comprising the epoxy curing agent as defined in any one of Claims 1 to 5 and an epoxy resin.

**7.** The epoxy resin curing composition according to Claim 6, which further contains a curing accelerator.

**8.** The epoxy resin curing composition according to Claim 7, which contains from 50 to 500 parts by mass of the epoxy curing agent and from 0.1 to 10 parts by mass of the curing accelerator, per 100 parts by mass of the epoxy resin.

**9.** A process for producing the epoxy curing agent as defined in any one of Claims 1 to 5, which comprises the following steps (a) and (b):

Step (a): surface-treating colloidal silica particles in a silica sol dispersed in a non-alcoholic organic solvent, with an organic silane compound; and
Step (b): substituting a fully saturated dicarboxylic anhydride for the non-alcoholic organic solvent which is the dispersion medium in the silica sol dispersed in the non-alcoholic organic solvent containing the surface-treated colloidal silica particles, obtained in step (a).

**10.** A process for producing the epoxy curing agent as defined in any one of Claims 1 to 5, which comprises the following steps (a'), (b') and (c'):

Step (a'): surface-treating colloidal silica particles in a silica sol dispersed in an alcoholic organic solvent, with an organic silane compound;
Step (b'): substituting a non-alcoholic organic solvent for the alcoholic organic solvent which is the dispersion medium in the silica sol dispersed in the alcoholic organic solvent containing the surface-treated colloidal silica particles, obtained in step (a'); and
Step (c'): substituting a fully saturated dicarboxylic anhydride for the non-alcoholic organic solvent which is the dispersion medium in the silica sol dispersed in the non-alcoholic organic solvent containing the surface-treated colloidal silica particles, obtained in step (b').

**11.** A cured epoxy resin product wherein the epoxy curing agent as defined in any one of Claims 1 to 5 is used.

**INTERNATIONAL SEARCH REPORT**

International application No.
PCT/JP2008/069809

A. CLASSIFICATION OF SUBJECT MATTER
*C08G59/42*(2006.01)i, *C08K3/36*(2006.01)i, *C08K9/04*(2006.01)i, *C08L63/00* (2006.01)i

According to International Patent Classification (IPC) or to both national classification and IPC

B. FIELDS SEARCHED

Minimum documentation searched (classification system followed by classification symbols)
C08G59/42, C08K3/36, C08K9/04, C08L63/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-71503 A (Hitachi Chemical Co., Ltd.), 16 March, 1999 (16.03.99), Claims; Par. Nos. [0001] to [0020] (Family: none) | 1-11 |
| A | JP 11-20063 A (Toray Industries, Inc.), 26 January, 1999 (26.01.99), Claims; Par. Nos. [0001] to [0081] (Family: none) | 1-11 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 November, 2008 (17.11.08) | 02 December, 2008 (02.12.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI1174424 A
- JP 2005225964 A
- JP HEI1171503 A
- JP 1317115 A
- JP 2007309253 A